# EUROPEAN PATENT APPLICATION

(11) **EP 2 559 659 A1**
(43) Date of publication of application: **20.02.2013**
(21) Application number: 11178127.4
(22) Date of filing: 19.08.2011
(51) Int. Cl.: C01B 7/07

(54) **A process for separating hydrogen chloride gas out of a mixture of hydrogen chloride and phosgene**

(71) Applicant: HUNTSMAN INTERNATIONAL LLC, Salt Lake City, Utah 84108 (US)
(72) Inventor: The designation of the inventor has not yet been filed
(74) Representative: Swinnen, Anne-Marie

(57) **Abstract**

A process for separating hydrogen chloride gas out of a mixture of hydrogen chloride and phosgene comprises the steps of
■ Providing a liquid mixture and a gaseous mixture both comprising hydrogen chloride and phosgene;
■ washing phosgene out of the gaseous fluid flowing in the column in a direction bottom-to-top in the first section of a column and stripping hydrogen chloride out of the liquid fluid flowing in the column in a direction top-to-bottom in the second section of the column;
■ evacuating the gaseous fluid and the liquid fluid flowing in the column.

## Description

The present invention relates to processes for the conversion of an amine to the corresponding isocyanate component by phosgenation of the amine. In particular the invention relates to purification and/or separation of hydrogen chloride and phosgene in the effluent streams of such processes.

In processes where amines are converted to isocyanates using phosgene, as well known in the art, a disadvantage is that in the phosgenation process, typically an excess of phosgene is used, or that the phosgenation typically does not consume all phosgene in the reaction mixture, while hydrogen chloride is obtained by the conversion of an amine group to an isocyanate group, or to the intermediate species in this conversion being isocyanate-HCl species known as carbamoyl chlorides. Hence typically the reaction mixture, either gaseous or liquid, e.g. all components dissolved in a solvent, comprises phosgene and hydrogen chloride.
Often the hydrogen chloride is separated from the reaction, and can be used in other processes or as a recycle stream, provided the hydrogen chloride is purified to meet the needs of its further use.
Often there is a need to remove the phosgene from the hydrogen chloride, as is e.g. described in EP1575906A.

A process for separating hydrogen chloride gas out of a mixture of hydrogen chloride and phosgene according to the invention comprises the steps of
■ Providing a liquid mixture and a gaseous mixture both comprising hydrogen chloride and phosgene;
■ washing phosgene out of the gaseous fluid flowing in the column in a direction bottom-to-top in the first section of a column and stripping hydrogen chloride out of the liquid fluid flowing in the column in a direction top-to-bottom in the second section of the column;
■ evacuating the gaseous fluid and the liquid fluid flowing in the column.

According to a first aspect of the invention, a column is provided. The column is a column for simultaneously removing a first component out of a liquid fluid by stripping and removing a second component out of a gaseous fluid by washing, which liquid fluid and gaseous fluid both comprise said first and said second component, said column comprises
■ having a top side and a bottom side;
■ A first section suitable for washing a gaseous stream flowing in a direction bottom-to-top with a washing liquid flowing top-to-bottom;
■ A second section suitable for stripping a liquid flowing top-to-bottom with a stripping gas flowing bottom-to-top, said first and second section being coupled such that said stripping gas flows bottom-to-top through the first section after leaving the second section and washing liquid flows top-to-bottom through the second section after leaving said first section;
■ A feed inlet for feeding a liquid fluid and a gaseous fluid at a position between the first and the second section;
■ A means for supplying washing liquid at a position before the first section;
■ A means for providing stripping gas at a position after the second section;
■ A means for evacuating a gaseous stream at the top side of the column;
■ A means for evacuating a liquid at the bottom side of the column.

By integrating the washing of the gaseous fluid and stripping of the liquid fluid in one column, the requirements for external transfer piping between stripping device and washing device are minimised, even made superfluous. The column further may cause, the pressure losses that the gaseous fluid encounter, to be reduced. The column further may minimize the energy needed to compensate for these losses. The column may use the gravity to the maximum extent to facilitate the transfer of the liquid fluid from top-to-bottom.

A fluid flowing top-to-bottom means that the fluid flows inside the column in the direction from the top of the column to the bottom of the column. A fluid flowing bottom-to-top means that the fluid flows inside the column in the direction from the bottom of the column to the top of the column, i.e. in counter flow of a top-to-bottom flowing fluid.

The feed inlet is provided such that the gaseous fluid feed, when fed to the column, can flow in bottom-to-top direction through the first section, while the liquid fluid fed can flow in top-to-bottom direction through the second section.

A gaseous fluid and a liquid fluid are fed via the feed inlet of the column. By taking appropriate measures, e.g. by reducing the pressure at the top of the column, the gaseous fluid will be forced to flow bottom-to-top. Washing liquid is used to wash the upward flowing gaseous fluid, thereby removing the first component from the gaseous fluid. The washing liquid is chosen such that the first components will flow downwards, i.e. in a direction top-to-bottom, along with the washing liquid.
Simultaneously, a stripping gas is fed at the bottom side of the column. The liquid fluid fed to the column will flow downwards in the second section where the liquid is stripped with the stripping gas, hereby removing the second component from the liquid, which second component will be taken along with the stripping gas towards the top of the column.
As the first and second section are coupled such that the stripping gas flows bottom-to-top through the first section after leaving the second section and the washing liquid flows top-to-bottom through the second section after leaving said first section, possible first components that are knocked down by the washing liquid, may be stripped off by the washing liquid when the washing liquid flows through the second section. Similarly, second components being taken along with the stripping gas after the second section, may be trapped and washed out of the stripping gas while flowing through the first section. Hence a more efficient separation of the first and second components out of the liquid and gaseous fluids can be obtained.

In a preferred embodiment, the column is a substantially cylindrical tower erected with its axis substantially parallel to the vertical. The first section typically is a segment of the cylinder located near the top, whereas the second section is a segment of the cylinder located under the first segment in a direction top-to-bottom along the axis of the tower.

According to some embodiments, the first section may comprise at least a first and a second subsections consecutively arranged in top-to-bottom direction, and means to cool the washing liquid after leaving the first subsection and before entering the second subsection.

Typically the first section comprises more than 2 subsections consecutively arranged in top-to-bottom direction, e.g. 3 subsections, and a number of means to cool the washing liquid between each pair of subsequent subsections.

The subsections may be separated from the others by a gas-permeable partitioning means that prevents at least part of the descending washing liquid to flow directly to the subsequent subsection, whereas this gas-permeable partitioning means allows the stripping gas and the gaseous fluid to continue to flow from the one subsection to the other subsection. This partitioning means may be e.g. deck style, trough style, chevron vane style liquid collectors, or any other liquid collectors that substantially collect the liquid flow with minimal impediment to the vapour flow.

The washing liquid provided to the first section may be cooled. Hence the column may comprise, as an associated unit, a cooling means to cool the fresh washing liquid. Optionally, in case there is intermediate cooling of the wash liquid between one or more subsections of the first section, the cooling means may be used to cool the washing liquid at these intermediate stages.

The first section, or each of the subsections in case of intermediate cooling of the wash liquid, may be packed sections, provided with a suitable packing. Such suitable packing may be Raschig rings, Pall rings, Saddles, IMTP, Nutter rings or any other commercially available random packing.
It is understood that subsequent subsections may be provided with identical, similar or different packing.
Alternatively, the first section or each of the subsections of the first section may contain structured packing such as Mellapak, Flexipac or Montz-Pak.

Above the first section, i.e. between the first section and the means for evacuating a gaseous stream at the top side of the column, i.e. the gas outlet of the column, a condenser or a demister may be provided.

The washing liquid is fed to the first section of the column by using any one of spray nozzle(s), pan type, deck type, channel type, tubular type, trough type, pipe-arm type or any other type of liquid distribution device that gives sufficient distribution for the selected mass transfer internals.
In an identical or similar way, the cooled washing liquid may be fed between two subsequent subsections.

The second section may be packed sections, provided with a suitable packing. Such suitable packing may be Raschig rings, Pall rings, Saddles, IMTP, Nutter rings or any other commercially available random packing.
Alternatively, the second section may comprise or even consist of trays of the type valve, bubble cap, sieve or any other tray type mass transfer device.

The stripping gas is fed to the first section of the column by using any suitable vapour distributor, e.g. deck type, lateral arm type, diffuser type, vane type or baffle type, or any other device that suitable distributes the vapour over the full column area.

The column according to the invention may further comprise, as an associated unit, a boiling means to heat and partially evaporate the liquid obtained after the second section. This may be a so-called reboiler to boil the stripped liquid fluid fed to the column, in combination with the washing liquid used to wash the gaseous fluid fed to the column.

A liquid is evacuated at the bottom side of the column. Before evacuating this liquid, additional liquids may be added to the bottom of the column. At the bottom of the column, the combination of the descended stripped liquid feed and the washing liquid used may be mixed with other liquids before removing or evacuation of this mixture.

The bottom liquid can be evacuated using either gravity flow or can flow to e.g. the phosgenation reaction through a pump providing sufficient head in order to enter said phosgenation. The bottom liquid outlet temperature will run between the inlet temperatures of all the feed fluids, i.e. -10 to 40 deg C, which may be, surprisingly, immediately suitable for use in the phosgenation section without further temperature change stages being necessary.

The column can be used to separate hydrogen chloride from a feed comprising hydrogen chloride and phosgene, optionally with an additional solvent such as monochlorobenzene or alike.
Such feed streams may be obtained in a process for phosgenation of amines into the corresponding isocyanates. Amines, typically dissolved in a solvent, are reacted with phosgene, typically also dissolved in an identical solvent, in a continuous process. Typically a multi-stage phosgenation reaction takes place. This phosgenation of the amine into its isocyanate is done under molar excess of phosgene, and causes hydrogen chloride to be created. As such a liquid stream comprising isocyanates, phosgene, hydrogen chloride and solvent is obtained. In a first purifying step, phosgene, hydrogen chloride and some of the solvent is separated from the liquid by evaporation. To work-up this gaseous stream comprising the phosgene, hydrogen chloride and some of the solvent, typically this gaseous stream is partially condensed to provide a liquid fluid comprising phosgene, hydrogen chloride and some of the solvent, and a gaseous fluid comprising phosgene, hydrogen chloride and some of the solvent. These fluids are often provided as a two-phase flow mixture. To obtain hydrogen chloride cleaned from solvent and phosgene, a further clean up of the gaseous fluid is necessary. To improve the conversion of amine hydrochlorides and to improve the final product isocyanate quality it is advisable to remove as much hydrogen chloride from the liquid fluid as well.
The column according to the first aspect of the present invention is suitable to work-up these liquid and gaseous fluids.
Feed streams may also be obtained in alternative processes using phosgene, whereby in the process hydrogen chloride is formed, e.g. a process of
a) formation of chloroformates from alcohols, phenol, substituted phenols, or
b) formation of carbonates from alcohols, phenol, substituted phenols, or
c) formation of carbamoyl chlorides from primary amines and secondary amines, or
d) formation of sulphonyl isocyanates from sulphonamides, or
e) formation of carbodiimides from substituted ureas.

According to a second aspect of the present invention, a process for separating hydrogen chloride gas out of a mixture of hydrogen chloride and phosgene is provided. The process comprises
■ Providing a liquid mixture comprising hydrogen chloride and phosgene and a gaseous mixture comprising hydrogen chloride and phosgene;
■ Feeding the liquid mixture and the gaseous mixture to a feed inlet of a column according to any of the embodiments of the first aspect of the present invention;
■ providing a liquid solvent suitable to dissolve phosgene to the means for supplying washing liquid of the column, thereby washing phosgene out of the gaseous fluid flowing in the column in a direction bottom-to-top in the first section of the column;
■ providing a stripping gas to the means for supplying stripping gas of the column, thereby stripping hydrogen chloride out of the liquid fluid flowing in the column in a direction top-to-bottom in the second section of the column;
■ evacuating the gaseous fluid flowing in the column in a direction bottom-to-top through the means for evacuating a gaseous stream at the top side of the column, thereby obtaining a gaseous fluid comprising hydrogen chloride and the stripping gas and optionally traces of the washing liquid and phosgene;
■ evacuating the liquid fluid flowing in the column in a direction top-to-bottom through the means for evacuating a liquid stream at the bottom side of the column, thereby obtaining a liquid fluid comprising phosgene, the washing liquid and optionally traces of hydrogen chloride.

According to some embodiments, the liquid mixture comprising hydrogen chloride and phosgene and the gaseous mixture comprising hydrogen chloride and phosgene may be provided as a two-phase flow mixture comprising hydrogen chloride and phosgene both in the gaseous and the liquid phase.

According to some embodiments, at least one of the liquid mixture and the gaseous mixture further may comprise a solvent.

According to some embodiments, both the liquid mixture and the gaseous mixture further may comprise a solvent.

According to some embodiments, the washing liquid may be identical to the solvent. Suitable solvents can include but are not limited to e.g. monochlorobenzene. 1,2-dichlorobenzene, 1,3-dichlorobenzene or 1,4-dichlorobenzene, or mixtures thereof.

According to some embodiments, the gaseous stream evacuated at the top side of the column may be compressed and condensed for removing solvent from the gaseous stream.

According to some embodiments, the stripping gas may comprise N2 and CO.

The process according to the second aspect of the present invention, and hence the column according to the first aspect of the present invention, may be applied in processes for converting virtually all amine to its corresponding isocyanate through phosgenation. The processes are suitable for use in the phosgenation of e.g. toluene diamine (TDA) to toluene diisocyanate (TDI), hexamethylene diamine (HDA) to hexamethylene diisocyanate (HDI), isophorone diamine (IPDA) to isophorone diisocyanate (IPDI), methyldicyclohexylamine (H12MDA) to methyldicyclohexylisocyanate (H12MDI). It is understood that the amines mentioned may be used in crude form, i.e. as mixtures of isomers and other components obtained by the production process to provide the amine as is well known in the art.
Preferably the amine is crude methylene-bridged polyphenyl polyamines (also referred to as MDA). This crude methylene-bridged polyphenyl polyamines typically is a mixture of the isomers of methylenediphenyldiamine (so called 2,2' MDA, 2,4' MDA and 4,4' MDA), in combination with methylene-bridged polyphenyl polyamines comprising more than 2 phenyl and more than 2 amine groups in their structure. This crude methylene-bridged polyphenyl polyamines typically is prepared from aniline, or aniline derivatives, by reacting them with formaldehyde in the presence of a solution of a strong acid such as, for example, hydrochloric, sulfuric or phosphoric acid. Formaldehyde may be used in any of its suitable forms, typically in aqueous solution known as formalin. Other means of preparing this polyamine mixture are well known, e.g. using solid acid catalysts or other suitable chemicals for this process.

The product of phosgenation and subsequent work-up of the polyamine mixture being crude methylene-bridged polyphenyl polyamines, can be termed "MDI", whereby MDI means any and all of the various mixtures of di- and polyfunctional methylene-bridged polyphenylene polyisocyanate molecules of various molecular weights, isomeric forms and various impurities known to those skilled in the art, such as dimers, carbodiimides, uretonimines, ureas, biurets, trimers, etc.

According to a third aspect of the invention, a process of converting an amine into isocyanate by phosgenation of the amine is provided. The process comprises the steps of
■ Providing a reaction mixture comprising an amine and phosgene to a phosgenation reactor;
■ at least partially converting the amine and the phosgene in the reaction mixture into the corresponding isocyanate component and hydrogen chloride,
thereby providing a liquid isocyanate stream comprising the isocyanate component, phosgene and hydrogen chloride;
■ separating a gaseous mixture comprising phosgene and hydrogen chloride from the liquid isocyanate stream;
■ at least partially condensing the gaseous mixture comprising phosgene and hydrogen chloride, thereby providing liquid mixture comprising hydrogen chloride and phosgene and a gaseous mixture comprising hydrogen chloride and phosgene;
■ separating hydrogen chloride gas out of the liquid mixture comprising hydrogen chloride and phosgene and the gaseous mixture comprising hydrogen chloride and phosgene using a process for separating hydrogen chloride gas out of a mixture of hydrogen chloride and phosgene according to any one of process according to the second aspect of the invention.

According to some embodiments, the reaction mixture further may compromise a solvent, the washing liquid used in the process for separating hydrogen chloride gas out of a mixture of hydrogen chloride being identical to the solvent.

According to some embodiments, the process further may comprise the reacting chlorine with carbon monoxide thereby providing phosgene for use as the phosgene in the reaction mixture and a gas comprising N₂ and CO, wherein the gas comprising N₂ and CO is used as the stripping gas used in the process for separating hydrogen chlorine gas out of a mixture of hydrogen chloride. The chlorine may contain traces of impurities such as bromine and/or iodine at levels above 1 ppm by weight in any form. The CO may contain traces of impurities such as oxygen and/or sulphur at levels above 1 ppm by weight in any form.
Traces of unreacted chlorine in the produces phosgene can be determined on-line by use of suitable analytical methodologies including, for example, those based on spectroscopy such as those employing UV and/or visible wavelengths.

According to some embodiments, the liquid stream evacuated at the bottom side of the column may be at least partially recycled to the reaction mixture.

The independent and dependent claims set out particular and preferred features of the invention. Features from the dependent claims may be combined with features of the independent or other dependent claims as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.
Fig. 1 is a schematic view of a column according to the present invention.
Fig. 2 is a schematic view of a process of converting an amine into isocyanate according to the present invention.

The same reference signs refer to the same, similar or analogous elements in the different figures.

The present invention will be described with respect to particular embodiments.
It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.
Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

The following terms are provided solely to aid in the understanding of the invention.

When reference is made to a column, this term is to be understood to include associated units and auxiliary equipment.
When reference is made to barg, this is to be understood as "bar gauge", i.e. the pressure expressed in bar, above the atmospheric pressure. When reference is made to bara, this is to be understood as "bar absolute", i.e. the absolute pressure expressed in bar.

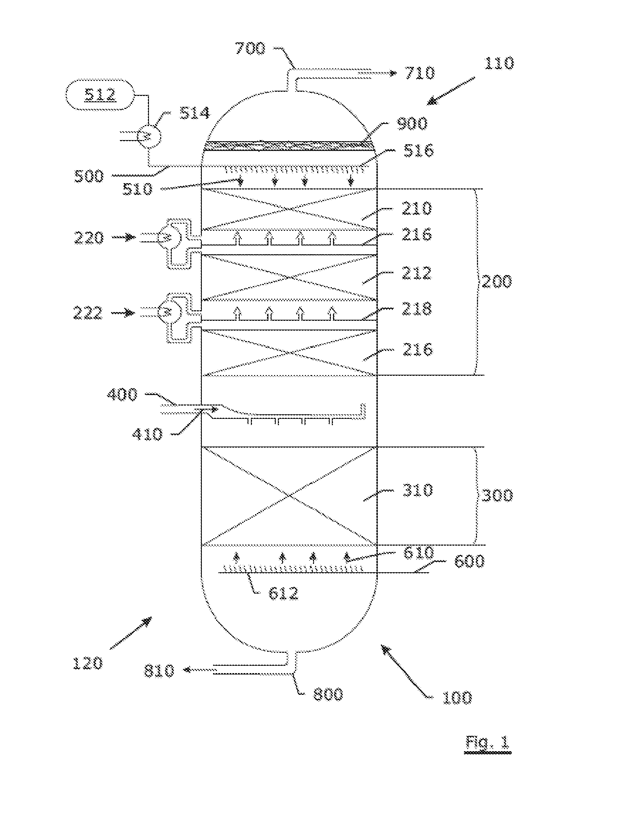

A column 100 according to the present invention is shown in figure 1. The use of this column will be explained using it as a part of a process wherein a two-phase flow mixture, both phases comprising phosgene, hydrogen chloride and MCB are separated in a hydrogen chloride rich gas stream, and a liquid stream comprising phosgene, MCB and some of the hydrogen chloride.

The column 100 has a top side 110 and a bottom side 120. A first section 200 which is suitable for washing a gaseous stream flowing in a direction bottom-to-top is provided.
A second section 300 is suitable for stripping a liquid flowing top-to-bottom with a stripping gas flowing bottom-to-top.
A feed inlet 400 for feeding a two-phase flow mixture 410, both phases comprising phosgene, hydrogen chloride and MCB at a position between the first section 200 and the second section 300 is provided.

A means 500 for supplying washing liquid 510 at a position before the first section 100 in a direction top-to-bottom, and a means 600 for providing stripping gas 610 at a position after the second section 200 in a direction bottom-to-top is provided.
At the top side 110 of the column 100 a means for evacuating a gaseous stream 710, i.e. a gas outlet 700 is provided. At the bottom side 120 of the column 100 a means for evacuating a liquid 810, i.e. a liquid outlet 800 is provided.

The washing liquid 510 is fresh MCB (512), being cooled by means of a cooler 514 and spread over the upper part of the first section 200 by supply means 516, which may be any one of spray nozzle(s), pan type, deck type, channel type, tubular type, trough type, pipe-arm type or any other type of liquid distribution device that gives sufficient distribution for the selected mass transfer internals. Between this supply means 516 and the gas outlet 700, a demister 900 is positioned to knock down possible droplets of MCB that may be taken along with the gas which is to leave the column 100 through the outlet 700.

The first section 200 is divided in three consecutive subsections 210, 212 and 214 in top-to-bottom direction. Each of the subsections 210, 212 and 214 is provided with a packing. Suitable packing is either a random packing or a structure packing giving a suitable mass transfer surface. Optionally, each of these subsections may be divided in two or more subsequent layers of packing.

Between each pair of subsections, i.e. between the first subsection 210 and the second subsection 212, and between the second subsection 212 and the third subsection 214, a partitioning means such as a plate 216 respectively 218 is provided, which plates prevent the descending liquid to run directly to the subsequent section. The descending liquid is collected by the plate and guided to a cooling means 220 respectively 222. The washing liquid which has washed phosgene out of the upwards flowing gas is cooled to evacuate the absorption heat released by the absorption of phosgene in the MCB washing liquid. Optionally, the cooler 514 and the cooling means 220 and 222 may be combined in one integrated cooling unit.

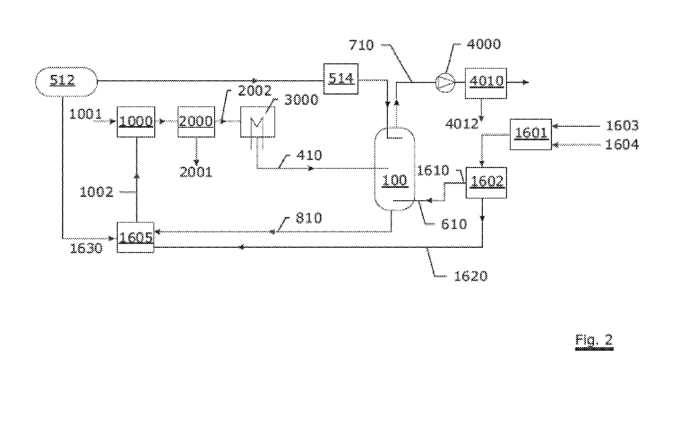

In the second section 300, the section is provided with a packing 310.
The stripping gas 610 is provided to the column and spread over the lower part of the packing 310 of the second section 300. Suitable packing 310 is either a random packing or a structure packing giving a suitable mass transfer surface. This spreading is accomplished by supply means 612, which may be any suitable vapour distributor, e.g. deck type, lateral arm type, diffuser type, vane type or baffle type, or any other device that suitably distributes the vapour over the full column area.
Alternatively the section may consist of trays of the type valve, bubble cap, sieve or any other tray type mass transfer device.
As can be seen in figure 2, this stripping gas 610 is the gaseous phase 1610 of the condenser 1602. This condenser condenses the phosgene obtained by reacting chlorine 1603 and carbon monoxide 1604 fed to the reactor 1601, where these components react to form phosgene. The condensate 1620 of the condenser 1602, being phosgene, is absorbed in MCB 1630 in the apparatus 1605.
The stripping gas 610 will comprise nitrogen (N₂), carbon monoxide (CO) and may comprise phosgene.

The two-phase flow mixture 410, both phases comprising phosgene, hydrogen chloride and MCB, is fed via the feed inlet 400. As the inlet pressure at feed inlet 400 is higher than the pressure at the top side 110 of the column, the gaseous fluid will be forced to flow bottom-to-top. Cooled MCB 510 washes the upward flowing gaseous fluid, thereby removing the phosgene and most of the MCB from the gaseous fluid. When the gas fluid reaches the top side of the column, the gaseous stream 710 provided to the gas outlet 700 comprises hydrogen chloride and traces of MCB. Substantially all phosgene will be washed out of the gas stream 710.
The MCB 510 will wash out the phosgene which will flow top-to-bottom along with the MCB.
Simultaneously, the stripping gas 610 is fed at the bottom side 120 of the column 100. The liquid fluid fed to the column 100 at feed inlet 400 will flow downwards in the second section 200 where the liquid is stripped with the stripping gas 610, hereby removing some hydrogen chloride from the liquid, which hydrogen chloride will be taken along with the stripping gas 610 towards the top side 110 of the column.
As the first and second section are coupled such that the stripping gas flows bottom-to-top through the first section after leaving the second section and the washing liquid flows top-to-bottom through the second section after leaving said first section, possible hydrogen chloride that is taken along by the MCB, may be stripped off by the stripping gas 610 when the MCB flows through the second section 200. Similarly, phosgene being taken along with the stripping gas 610 after the second section, may be trapped and washed out of the washing liquid while flowing through the first section.

As an example, and as shown in figure 2, MDA 1001 is reacted with a phosgene-containing feed stream 1002, to provide MDI, in reactor 1000. The MDA was dissolved in MCB. The phosgene used in this reaction is provided as phosgene 1620 dissolved in MCB 1630, combined with the liquid stream 810 evacuated from the liquid outlet 800 of the column 100.
In process step 2000, the MDI and the major part of the MCB (together stream 2001) are separated from the excess of phosgene and the produced hydrogen chloride. The latter are shown in figure 2 as gaseous mixture 2002. This gaseous mixture 2002 is partially condensed in condenser 3000 thereby providing the two-phase flow mixture 410.

The two-phase flow mixture 410 is fed to the column 100 at a temperature in the range of 10 to -40 deg C and at pressure of 0.5 to 10 barg. The MCB used as washing liquid is cooled to a temperature of 10 to -40 deg C and fed at the top side 110 of the column 100. Between the consecutive subsections of the first section of the column 100, the MCB is cooled to a temperature of 10 to -40 deg C.
By means of the compressor 4000, the pressure at the top side of the column 100 is kept between 0 and 10 barg. The compressor 4000 compresses the gaseous fluid 710 and thereafter the compressed gas is cooled and condensed in condenser 4010 such that substantially all MCB is condensed. The gas 4011 leaving the condenser 4010 is suitable to be used in other processes, e.g. in the production of chlorine, in its turn suitable as feed 1603 of reactor 1601.

The condensate 4012 may be worked up further, or may be guided back to e.g. the fist section 200 of the column 100.
The stripping gas 610 is the gaseous phase 1610 of the condenser 1602, and is fed to the column at a temperature in the range of 10 to -40 deg C and at a pressure of 0.5 to 10 barg.
The washing liquid, the phosgene and MCB present in the feed stream 410 are stripped and provide a liquid stream 810 at the bottom of the column 100 at a temperature of 10 to -40 deg C, which liquid can be taken out of the column and recycled to the phosgenation reaction in reactor 1000.
Using a two-phase flow mixture 410 wherein the liquid phase has a composition of mainly phosgene and MCB (less than 10% hydrogen chloride by mass of the total liquid portion of stream 410) and the gaseous phase has a composition of mainly hydrogen chloride (more than 50% by mass of the vapour phase of stream 410) and phosgene, and using appropriate amounts of stripping gas and MCB to perform the washing operation in column 100, a gaseous fluid 710 with a composition of at least 95% by mass hydrogen chloride may be obtained.

As an alternative, the phosgene 1620 may be mixed in the bottom of the column 100 with the liquid flowing top-to-bottom in the column 100. The amount of MCB used in the washing step may be partially or fully the amount of MCB taken out of the process through the MDI stream 2001.

It is to be understood that although preferred embodiments and/or materials have been discussed for providing embodiments according to the present invention, various modifications or changes may be made without departing from the scope and spirit of this invention.

## Claims

1. A column for simultaneously removing a first component out of a liquid fluid by stripping and removing a second component out of a gaseous fluid by washing, which liquid fluid and gaseous fluid both comprise said first and said second component, said column comprises
■ having a top side and a bottom side;
■ A first section suitable for washing a gaseous stream flowing in a direction bottom-to-top with a washing liquid flowing top-to-bottom;
■ A second section suitable for stripping a liquid flowing top-to-bottom with a stripping gas flowing bottom-to-top, said first and second section being coupled such that said stripping gas flows bottom-to-top through the first section after leaving the second section and washing liquid flows top-to-bottom through the second section after leaving said first section;
■ A feed inlet for feeding a liquid fluid and a gaseous fluid at a position between the first and the second section;
■ A means for supplying washing liquid at a position before the first section;
■ A means for providing stripping gas at a position after the second section;
■ A means for evacuating a gaseous stream at the top side of the column;
■ A means for evacuating a liquid at the bottom side of the column.

2. A column according to claim 1, wherein the first section comprises at least a first and a second subsections consecutively arranged in top-to-bottom direction, and means to cool the washing liquid after leaving the first subsection and before entering the second subsection.

3. A process for separating hydrogen chloride gas out of a mixture of hydrogen chloride and phosgene, the process comprises
■ Providing a liquid mixture comprising hydrogen chloride and phosgene and a gaseous mixture comprising hydrogen chloride and phosgene;
■ Feeding the liquid mixture and the gaseous mixture to a feed inlet of a column according to any one of the claims 1 to 2;
■ providing a liquid solvent suitable to dissolve phosgene to the means for supplying washing liquid of said column, thereby washing phosgene out of the gaseous fluid flowing in the column in a direction bottom-to-top in the first section of said column;
■ providing a stripping gas to the means for supplying stripping gas of said column, thereby stripping hydrogen chloride out of the liquid fluid flowing in the column in a direction top-to-bottom in the second section of said column;
■ evacuating the gaseous fluid flowing in the column in a direction bottom-to-top through the means for evacuating a gaseous stream at the top side of the column, thereby obtaining a gaseous fluid comprising hydrogen chloride and the stripping gas and optionally traces of the washing liquid and phosgene;
■ evacuating the liquid fluid flowing in the column in a direction top-to-bottom through the means for evacuating a liquid stream at the bottom side of the column, thereby obtaining a liquid fluid comprising phosgene, the washing liquid and optionally traces of hydrogen chloride.

4. A process according to claim 3, wherein said liquid mixture comprising hydrogen chloride and phosgene and said gaseous mixture comprising hydrogen chloride and phosgene are provided as a two-phase flow mixture comprising hydrogen chloride and phosgene both in the gaseous and the liquid phase.

5. A process according to any one of the claims 3 to 4, wherein at least one of said liquid mixture and said gaseous mixture further comprises a solvent.

6. A process according to any one of the claims 3 to 5, wherein both said liquid mixture and said gaseous mixture further comprises a solvent.

7. A process according to any one of the claims 5 to 6, wherein said washing liquid is identical to said solvent.

8. A process according to any one of the claims 5 to 7, wherein the gaseous stream evacuated at the top side of the column is compressed and condensed for removing solvent from the gaseous stream.

9. A process according to any one of the claims 3 to 8, wherein said stripping gas comprises N₂ and CO.

10. A process of converting an amine into isocyanate by phosgenation of said amine, the process comprising the steps of
■ Providing a reaction mixture comprising an amine and phosgene to a phosgenation reactor;
■ at least partially converting the amine and the phosgene in said reaction mixture into the corresponding isocyanate component and hydrogen chloride, thereby providing a liquid isocyanate stream comprising said isocyanate component, phosgene and hydrogen chloride;
■ separating a gaseous mixture comprising phosgene and hydrogen chloride from said liquid isocyanate stream;
■ at least partially condensing said gaseous mixture comprising phosgene and hydrogen chloride, thereby providing liquid mixture comprising hydrogen chloride and phosgene and a gaseous mixture comprising hydrogen chloride and phosgene;
■ separating hydrogen chloride gas out of said liquid mixture comprising hydrogen chloride and phosgene and said gaseous mixture comprising hydrogen chloride and phosgene using a process for separating hydrogen chloride gas out of a mixture of hydrogen chloride and phosgene according to any one of the claims 3 to 9.

11. A process according to claim 10, wherein said reaction mixture further compromises a solvent, the washing liquid used in the process for separating hydrogen chloride gas out of a mixture of hydrogen chloride being identical to said solvent.

12. A process according to any one of the claims 10 to 11, wherein said process further comprises the reacting chlorine with carbon monoxide thereby providing phosgene for use as the phosgene in the reaction mixture and a gas comprising N₂ and CO, wherein said gas comprising N₂ and CO is used as the stripping gas used in the process for separating hydrogen chloride gas out of a mixture of hydrogen chloride.

13. A process according to any one of the claims 10 to 12, wherein the liquid stream evacuated at the bottom side of the column is at least partially recycled to the reaction mixture.
